Europäisches Patentamt

European Patent Office

Office européen des brevets

(19)

(11) Numéro de publication: **0 007 349**
**B1**

(12) **FASCICULE DE BREVET EUROPEEN**

(45) Date de publication du fascicule de brevet: **15.07.81**

(51) Int. Cl.³: **B 60 R 19/06, F 16 F 7/12**

(21) Numéro de dépôt: **78900102.1**

(22) Date de dépôt: **07.07.78**

(86) Numéro de dépôt international:
**PCT/FR78/00007**

(87) Numéro de publication internationale:
**WO 79/00124 22.03.79 Gazette 79/6**

(54) Nouveau dispositif pare-chocs à haute absorption pour Véhicles

(30) Priorité: **02.09.77 FR 7727523**

(43) Date de publication de la demande:
**06.02.80 Bulletin 80/3**

(45) Mention de la délivrance du brevet:
**15.07.81 Bulletin 81/28**

(84) Etats Contractants Désignés:
**DE GB SE**

(56) Documents cités:
**FR - A - 2 178 299**

(73) Titulaire: **UGINE ACIERS**
**10, rue du Général Foy**
**F-75008 Paris (FR)**

(72) Inventeur: **FLUSIN, François**
**175, rue de la Pompe**
**F-75116 Paris (FR)**

(74) Mandataire: **Givord, Jean-Pierre**
**PECHINEY UGINE KUHLMANN 28, rue de Bonnel**
**F-69433 Lyon Cedex 3 (FR)**

Courier Press, Leamington Spa, England.

Nouveau dispositif pare-chocs à haute absorption pour véhicules

Le dispositif qui fait l'objet de l'invention concerne l'absorption des chocs subis, d'une façon générale, par tout mobile et plus particulièrement par tout type de véhicule. De façon plus précise, ce dispositif concerne l'absorption des chocs violents subis par les véhicules transportant des passagers et en particulier les véhicules automobiles et les wagons de chemin de fer.

Depuis plusieurs années, les problèmes relatifs à la sécurité des passagers des véhicules de tous types, lors des accidents, on fait l'objet de nombreuses études. Celles-ci ont montré que pour éviter ou réduire les traumatismes causés aux passagers des véhicules par les chocs violents, il fallait non seulement que les passagers soient solidement maintenus à l'intérieur, par exemple à l'aide de ceintures, mais encore que ces passagers ne soient pas soumis à des décélérations trop brutales. Des essais systématiques ont montré que les décélérations maximales supportables par le corps humain ne dépassaient pas 40 à 50 g (g étant l'accéleration de la pesanteur).

On s'est rendu compte qu'il ne fallait pas chercher à donner à l'ensemble constitué par le pare-chocs et le véhicule un maximum de rigidité mais qu'au contraire il fallaite rendre possibles en cas de choc des déformations élastiques ou permanentes dans des zones bien déterminées.

C'est ainsi que, par exemple, dans le brevet US 3 695 665 il est proposé d'utiliser pour absorber les chocs, des pare-chocs tubulaires disposés à l'avant et l'arrière des véhicules et réalisés dans une matière élastique telle que du caoutchouc, ces tubes étant remplis d'un fluide. Ce fluide peute s'échapper par de petits orifices offrant une forte résistance de passage et remplir des capacités auxiliaires à parois élastiques. Le système est conçu pour absorber de façon élastique et répétée des chocs de relativement faible intensité, l'énergie d'impact étant dissipée principalement par les frottements du fluide contre les parois des orifices qui mettent en communication la capacité auxiliaire avec le volume intérieur du pare-choc. Il est facile de comprendre que l'énergie susceptible d'être ainsi absorbée est limitée par la fait. qu'on ne peut pas réaliser des parois et des canalisations en élastomère, capables d'offrir de très grandes résitances à la déformation et au frottement et capables de supporter des échauffements à température élevée. Il faut savoir, en effet, qu'au cours de tels chocs pratiquement toute l'énergie absorbée est transformée en chaleur et ne peut être transmise au milieu ambiant qu' avec un grand retard.

Le brevet française 2 240 619 décrit un dispositif de conception analogue dans lequel le pare-choc comporte un profilé rigide qui est relié à une traverse fixe solidaire du châssis du véhicule par des capacités en forme de soufflet cylindrique dont les plis sont en matière élastique et qui contiennent un liquide. Sous l'action d'un choc, les soufflets sont comprimés et le liquide qu'ils contiennent s'échappe à travers des orifices étroits, ou étranglements, dans une chambre à parois élastiques qui se gonfle.

Comme dans le cas du brevet US, l'absorption d'énergie a lieu principalement grâce aux frottements qui résultent du passage du fluide à travers de très petits orifices ou étranglements réalisés dans la cloiso qui sépare le soufflet de la chambre à parois élastiques.

Ces dispositifs sont bien adaptés à l'absorption de chocs de très faible énergie cinétique, du genre de ceux qui se produisent lors de manoeuvres de garage d'un véhicule automobile, ou éventuellement lors de chocs à des vitesses ne dépassant pas quelques kilomètres à l'heure au moment de l'impact entre des véhicules automobiles en circulation urbaine.

En effet, dès que les vitesses d'impact deviennent supérieures à enviren une dizaine de kilomètres à l'heure, la capacité d'absorption de l'énergie cinétique par ces dispositifs devient très insuffisante, car les parois des capacités en élastomère ne peuvent plus opposer une résistance suffisante à l'élévation de pression considérable du fluide lors de l'impact, et l'énergie absorbée au cours du passage du fluide à travers les orifices calibrés ou les étranglements n'augemente pas lorsque croît l'énergie cinétique du choc. La seule solution possible, pour augmenter la capacité d'absorption de tels dispositifs, consisterait à accroître considérablement le volume de ces capacités déformables en élastomère, mais un tel accroissement dépasserait très largement les possibilités de montage de ces dispositifs sur les véhicules automobiles.

On a donc recherché la possibilité de réaliser un dispositif pare-chocs capable d'absorber des chocs de haute énergie cinétique tels que ceux qui résultent de l'impact d'un mobile ou d'un véhicule contre un obstacle fixe, ou non, à des vitesses pouvant atteindre plusieurs dizaines de kilomètres à l'heure, tout en donnant à ce dispositif des dimensions compatibles avec sa mise en place, par exemple sur des véhicules automobiles de type courant. On a recherché aussi la possibilité d'obtenir au moyen de tels dispositifs des décélérations ne dépassant pas 50 g. On a recherché enfin la possibilité d'absorber, au moyen de quantités relativement faibles de matière, des quantités relativement élevées d'énergie sans faire appel à des matériaux d'un coût prohibitif.

On a eu l'idée inattendue, pour résoudre ce problème, d'absorber cette énergie cinétique, non pas en faisant appel au frottement d'un fluide sur des parois, mais en utilisant directement cette énergie à la déformation plastique de métaux à résistance à la déformation élevée. Au cours des premiers essais, destinés à évaluer la possibilité de mettre en pratique une telle idée, on avait constaté que l'énergie cinétique absorbée par la déformation plastique d'un poutre constituée par un profilé en tôle, soumis à un effort de compression parallèlement à son axe, était en général très faible. En effet, a partir du moment où se produisait le phénomène de flambage de la poutre, les déformations plastiques étaient limitées à de très petits volumes situés aux endroits où s'étaient formés des replis de très faible rayon. Le volume de ces zones déformées plastiquement ne représentait le plus souvent que de l'ordre de 1% ou peut davantage du volume de métal de la poutre.

On a alors trouvé le moyen de réaliser une structure métallique capable d'absorber de grandes quantités d'énergie grâce à une déformation plastique intéressant pratiquement toute sa partie active. Cette structure qui joue le rôle de récepteur de l'énergie libérée au moment d'un choc est constituée par une enceinte, de relativement petites dimensions, réalisée dans un métal ou alliage métallique apte à subir de grandes déformations plastiques sous l'action de contraintes élevées. L'énergie d'impact développée au moment d'un choc est transmise à cette enceinte par un fluide, peu compressible et résistant à la chaleur, qu'elle contient. Ce fluide du type de ceux utilisés pour les freins hydrauliques de véhicules rapides est mis en pression au moment du choc et exerce alors sur la face interne de la paroi de l'enceinte des efforts qui dépassent rapidement la limite élastique du métal ou alliage qui la constitue et entraînent sa déformation plastique en expansion.

Dans un mode préférentiel de réalisation du dispositif suivant l'invention, cette enceinte réceptrice est en communication avec une enceinte également métallique remplie du même fluide qui joue le rôle d'émetteur. Cette enceinte émettrice est concue pour recevoir de façon directe ou indirecte le choc que subit le véhicule, et s'aplatir progressivement sous l'effet de ce choc, en éjectant une partie au moins du fluide qu'elle contient en direction de l'enceinte réceptrice dont les parois se dilateront par déformation plastique au fur et à mesure de l'arrivée du fluide. Les deux enceintes émettrice et réceptrice peuvent être accolées l'une à l'autre ou au contraire disposées à une certaine distance l'une de l'autre, et mises en communication par un tube de liaison.

Comme on va le voir par les exemples, il est possible de réaliser des enceintes émettrice et réceptricespermettant d'amortir des chocs violents. Les dimensions de l'enceinte émettrice doivent permettre l'amortissement du choc par une déformation progressive et ses parois doivent résister sans se fissurer à la pression interne du fluide qui est éjecté progressivement en direction de l'enceinte réceptrice. Les caractéristiques de cette dernière doivent être calculées pour pouvoir recevoir par déformation plastique le fluide éjecté à partir de l'enceinte émettrice sans rupture, ou tout au moins avec rupture consécutive à une déformation plastique importante.

Les exemples non limitatifs ci-après décrivent plusieurs modes de mise en oeuvre de l'invention. Dans ces exemples, l'enceinte réceptrice qui doit absorber l'énergie cinétique par déformation plastique a été réalisée en acier austénitique à austénite instable car de tels aciers sont particulièrement intéressants comme matériau absorbeur de fortes énergies d'impact, en raison d'une part de leur grande écrouissabilité et d'autre part de la conservation de leurs propriétés pour de trés grandes vitesses de déformation.

### Exemple 1

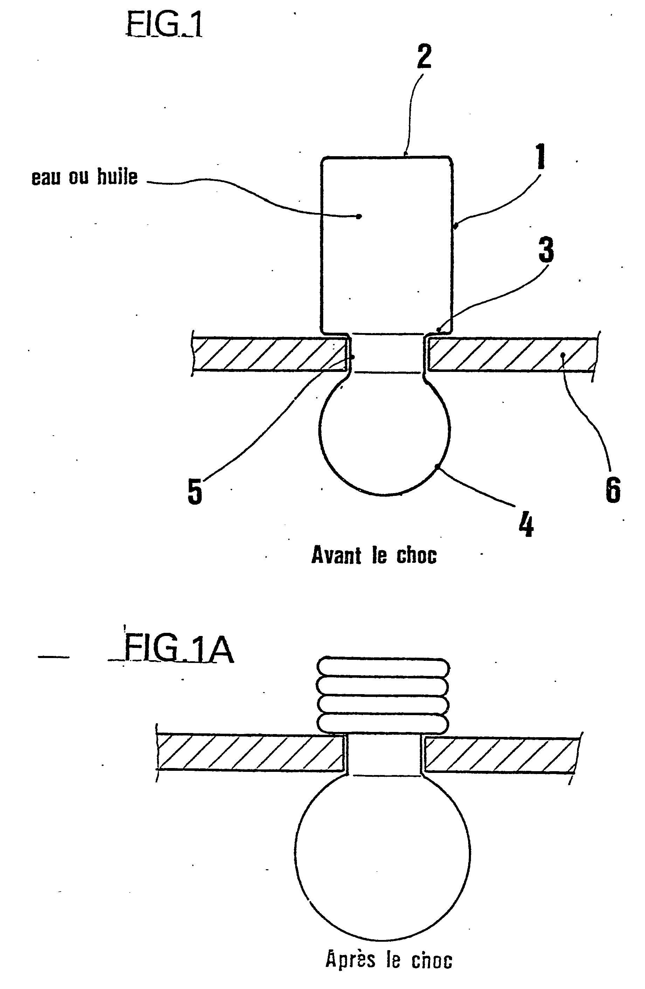

Cete exemple décrit le principe de fonctionnement du dispositif suivant l'invention. La figure 1 représente un cylindre (1), en acier Z 10CN 17—08 (norme AFNOR), obturé à son extrémité (2) par und fond de même épaisseur "E" qui s'appuie par son autre extrémité (3) sur un support (6) disposé à l'avant d'un véhicule et solidaire du châssis. L'extrémité (2) est orientée vers l'avant, le fond (3) est ouvert de façon que le cylindre (1) communique avec une sphère (4) également en acier Z10CN 17—08 et d'épaisseur "e" telle que e<E. La communication entre le cylindre (1) et la sphère (4) est établie par l'intermédiaire d'un tube (5) les trois pièces étant assemblées de telle façon qu'elles constituent un ensemble étanche au fluide contenu (eau ou huile par exemple). En cas de choc frontal de l'avant du véhicule contre un obstacle fixe ou mobile, le choc écrase le cylindre (1) qui flambe en accordéon. Il en résulte une augmentation de pression au sein du liquide, qui gonfle la sphère (4). Les dimensions du cylindre (1) et de la sphère (4) sont calculées de telle façon que l'énergie de déformation soit comparable à l'énergie à absorber. Notamment, l'épaisseur du cylindre (1) est suffisamment grande pour que la cumul des déformations imputables d'une part au flambage en accordéon, d'autre part à l'augementation de pression, ne risque pas de provoquer sa rupture. La diminution de hauteur du cylindre (1), provoquée par l'écrasement, détermine la décélération acceptable par le corps humain à partir de la vitesse d'impact pour laquelle le dispositif est construit.

### Exemple 2

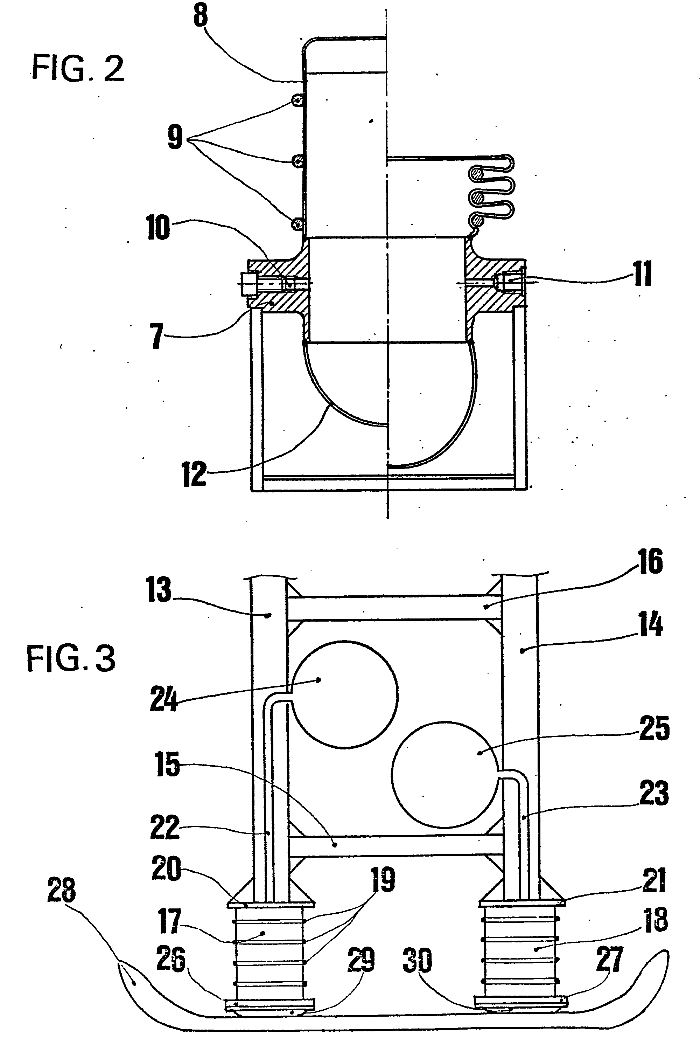

Une réalisation expérimentale pour essais de simulation est représentée figure 2. Sur une couronne (7) en acier inoxydable, norme AFNOR Z2CN 18—10 sont soudés respectivement un cylindre (8) en tôle d'acier inoxydable Z10CN 17—08 d'épaisseur E = 1 mm, de diamètre 100 mm, de hauteur 130 mm environ, et une demi-sphère (12) emboutie en tôle d'acier inoxydable de même nuance, d'épaisseur e = 0,6 mm et de diamètre 100 mm. Des frettes (9) en fil d'acier inoxydable Z10CN 18—09, de diamètre 7 mm, sont réparties sur la hauteur du cylindre (8) de façon à localiser la formation des plis lors du choc. Le remplissage, par de l'huile, du recipient ainsi formé se faite par l'orifice (10) qui sera ensuite fermé par un bouchon. La pression intérieur est mesurée au moyen d'un manomètre raccordé à l'enceinte par l'orifice (11). Le pourtour de la couronne (7) repose sur un support en acier doux figurant le châssis du véhicule.

En exerçant sur la face supérieure du cylindre un effort croissant jusqu'à 135 000 N, le cylindre s'est écrasé de 55 mm, la pression intérieure est montée de 130 bars et la demi-sphère s'est rompue après avoir subi un allongement bi-axial de 30% mesuré sur base de 5 mm, ce qui correspond à une énergie totale de déformation de 5000 J. Cette énergie correspond à celle d'un mobile de masse 230 kg frappant un obstacle fixe à la vitesse de 24 km/h, l'arrêt se produisant avec une décélaration moyenne de 40 g.

### Exemple 3

La figure 3 représente un dispositif suivant l'invention monté sur un véhicule automobile d'une masse totale de 1000 kg. Sur cette figure on a représenté uniquement le mode de montage du dispositif pare-chocs à l'avant de véhicule dont ne sont représentées que les extrémités de deux longerons (13) et (14), de grande rigidité qui sont solidaires entre eux par des traverses telles que (15) et (16) et aussi de façon non décrite avec la structure résistante du véhicule.

Dans le prolongement de ces deux longerons sont montées deux viroles cylindriques (17) et (18) à son axe horizontal en acier Z10CN 17—08 de 160 mm de diamètre, 300 mm de long et 1,5 mm d'épaisseur. Des frettes annulaires telles que (19) en fil d'acier inoxydable Z10CN 18—09 de 3 mm de diamètre ceinturent chaque virole tous les 50 mm environ. Ces viroles sont soudées par leur extrémité arrière à deux disques en acier de même nuance (20) et (21) de 200 mm de diamètre et 3 mm d'épaisseur, eux-mêmes soudés à l'extrémité des longerons. Deux tubes (22) et (23) à haute résistance à la pression, raccordés chacun par une extrémité à l'un des disques (20) et (21) et par l'autre à l'une des sphères (24) et (25) mettent en relation le volume intérieur de chaque cylindre avec celui d'une sphère. Chaque sphère, également en acier Z10CN 17—08 mesure 120 mm de rayon et 1 mm d'épaisseur.

Les viroles (17) et (18) sont fermées à l'avant par des disques (26) et (27) soudés, leurs dimensions sont les mêmes que selles des disques (20) et (21).

Une structure de pare-chocs classique constituée d'un profilé en acier (28) est fixée au moyan d'attaches (29) et (30) aux disques (26) et (27). Chaque ensemble constitué par un cylindre, une sphère et le tube qui les joint est rempli par un fluide hydraulique ayant de préférence une faible viscosité, stable à la chaleur, et peu compressible.

Les essais ont montré qu'un tel dispositif était capable d'absorber l'énergie cinétique libérée par le choc frontal d'un véhicule de 1000 kg lancé à 40 km/h contre un mur fixe. Au cours d'un tel choc, la pression dans le systéme hydraulique, passe par un maximum d'environ 100 bars, l'énergie absorbée par la déformation plastique de chaque sphère est d'environ 30 800 joules, soit 61 600 J pour l'ensemble des deux sphères. Enfin la décélération est d'environ 30 g.

Il est bien évident que de nombreux autres modes de réalisation du dispositif suivant l'invention peuvent être envisagés. En particulier la mise en pression du fluide dans l'enceinte réceptrice peut être effectuée par d'autres moyens que par l'écrasement d'une enceinte émettrice. On peut, en particulier, remplacer cette enceinte émettrice par un cylindre à l'intérieur duquel est placé un piston disposé de façon à recevoir les chocs éventuels de façon directe ou indirecte. Dans ce cas, lors d'un choc, le piston s'enfoncera dans le cylinc e et chassera le fluide contenu dans celui-ci qui sera envoyé par un tube de liaison dans une enceinte réceptrice plastiquement déformable, par exemple du type décrit dans l'exemple 3.

On pourrait même éventeullement envisager de faire pénétrer directment un piston plongeur solidaire du pare-chocs dans une enceinte à parois déformables plastiquement déjà décrite.

Enfin, la forme de l'enceinte réceptrice à parois déformables plastiquement peut être quelconque. Les formes sphériques ou en partie spheriques sont en principe les plus favorables mais il est évident que d'autre formes peuvent être envisagées. Les déformations plastiques obtenues par le fluide contenu dans la capacité le seront de la façon la plus générale par expansion. Cette expansion pourra éventuellement être orientée dans certaines directions priviligiées et limitée dans d'autres.

## Revendications

1. Procédé pour absorber progressivement l'énergie cinétique libérée par le choc d'un mobile contre un obstacle fixe ou non, caractérisé en ce que cette énergie est transmise par l'intermédiaire d'un fluide aux parois d'une enceinte métallique réceptrice qui se déforme de façon plastique.

2. Procédé suivant 1, caractérisé en ce que le fluide transmetteur provient d'une enceinte métallique émittrice comprimée au moment du choc.

3. Procédé suivant 1, caractérisé en ce que le fluide transmetteur est injecté dans l'enceinte réceptrice au moyen d'un piston de déplaçant dans un cylindre.

4. Procédé suivant 1, caractérisé en ce que le fluide transmetteur est mis en pression dans l'enceinte réceptrice au moyen d'un piston plongeur qui pénètre à l'intérieur de cette enceinte.

5. Dispositif pour la mise en oeuvre du procédé suivant l'une des revendications 1, 2, 3 ou 4, caractérisé en ce que l'enceinte réceptrice est en acier austénitique à austénite instable.

6. Dispositif suivant la revendication 5, caractérisé en ce que l'enceinte émettrice est en acier inoxydable.

7. Dispositif suivant 5, caractérisé en ce que l'enceinte réceptrice comporte des parties déformables sphériques ou en partie sphériques.

8. Dispositif suivant la revendication 5, caractérisé en ce que le fluide utilisé est un liquide.

## Claims

1. A method of progressively absorbing the kinetic energy liberated by the impact of a moving body against an obstacle which may be stationary or not stationary, characterised in that this energy is transmitted by means of a fluid to the walls of a metallic receiving chamber which deforms plastically.

2. A method according to 1, characterized in that the transmitting fluid originates from a metallic emitting chamber which is compressed at the moment of the impact.

3. A method according to 1, characterized in that the transmitting fluid is injected into the receiving chamber by means of a piston moving in a cylinder.

4. A method according to 1, characterized in that the transmitting fluid is compressed in the receiving chamber by means of a plunging piston which penetrates the interior of this chamber.

5. A device for carrying out the method according to one of claims 1, 2, 3 or 4, characterized in that the receiving chamber is made of austenitic steel with unstable austenite.

6. A device for carrying out the method according to 2, characterized in that the emitting chamber is made of stainless steel.

7. A device according to 5, characterized in that the receiving chamber comprises spherical or partially spherical deformable parts.

8. A device according to 5 characterized in that the fluid which is used is a liquid.

## Patentansprüche

1. Verfahren zur progressiven Aufnahme der kinetischen Energie, die durch den Stoss eines beweglichen Körpers gegen ein feststehendes oder nicht feststehendes Hindernis freigegeben wird, dadurch gekennzeichnet, dass die Energie über eine Fluid auf die Wand eines metallischen Aufnahmebehälters übertragen wird, der sich plastisch verformt.

2. Verfahren nach Anspruch 1, dadurch gekennzeichnet, dass das Übertragungsfluid von einem metallischen Abgabebehälter stammt, der im Augenblick des Stosses zusammengedrückt wird.

3. Verfahren nach Anspruch 1, dadurch gekennzeichnet, dass das Übertragungsfluid durch einen sich in einem Zylinder verschiebenden Kolben in den Aufnahmebehälter eingespritzt wird.

4. Verfahren nach Anspruch 1, dadurch gekennzeichnet, dass das Übertragungsfluid im Aufnahmebehälter durch einen in den Innenraum dieses Behälters eindringenden Tauchkolben unter Druck gesetzt wird.

5. Vorrichtung zur Durchführung des Verfahrens nach einem der Ansprüche 1, 2, 3 oder 4, dadurch gekennzeichnet, dass der Aufnahmebehälter aus austenitischem Stahl mit instabilem Austenit besteht.

6. Vorrichtung zur Durchführung des Verfahrens nach Anspruch 2, dadurch gekennzeichnet, dass der Abgabebehälter aus nichtrostendem Stahl besteht.

7. Vorrichtung nach Anspruch 5, dadurch gekennzeichnet, dass der Aufnahmebehälter kugelförmige oder teilweise kugelförmige verformbare Teile aufweist.

8. Vorrichtung zur Durchführung des Verfahrens nach einem der Ansprüche 1, 2, 3 oder 4, dadurch gekennzeichnet, dass das verwendete Fluid eine Flüssigkeit ist.

FIG.1

**2**

**1**

eau ou huile

**3**

**5**

**4**

**6**

Avant le choc

FIG.1A

Après le choc

0 007 349

FIG. 2

FIG. 3

2